(19) Europäisches Patentamt
European Patent Office
Office européen des brevets

(11) **EP 4 146 970 B1**

(12) **EUROPÄISCHE PATENTSCHRIFT**

(45) Veröffentlichungstag und Bekanntmachung des Hinweises auf die Patenterteilung:
**17.04.2024  Patentblatt 2024/16**

(21) Anmeldenummer: **21725446.5**

(22) Anmeldetag: **05.05.2021**

(51) Internationale Patentklassifikation (IPC):
**F16L 11/08** *(2006.01)*        **F16L 33/22** *(2006.01)*

(52) Gemeinsame Patentklassifikation (CPC):
**F16L 33/22; F16L 11/085**

(86) Internationale Anmeldenummer:
**PCT/EP2021/061845**

(87) Internationale Veröffentlichungsnummer:
**WO 2021/224325 (11.11.2021 Gazette 2021/45)**

(54) **SCHLAUCH, SCHLAUCHANORDNUNG UND KORRESPONDIERENDES VERFAHREN ZUR HERSTELLUNG EINER SCHLAUCHANORDNUNG**

HOSE, HOSE ARRANGEMENT AND CORRESPONDING PROCESS FOR MANUFACTURING A HOSE ARRANGEMENT

FLEXIBLE, DISPOSITIF DE FLEXIBLE ET PROCÉDÉ CORRESPONDANT POUR LA FABRICATION D'UN DISPOSITIF DE FLEXIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2020   DE 202020102527 U**

(43) Veröffentlichungstag der Anmeldung:
**15.03.2023   Patentblatt 2023/11**

(73) Patentinhaber: **Neoperl GmbH**
**79379 Müllheim (DE)**

(72) Erfinder:
• **HÖPPNER, Jürgen**
**79379 Müllheim (DE)**
• **OECHSLE, Daniel**
**79379 Müllheim (DE)**
• **REINHARDT, Holger**
**79232 March/Buchheim (DE)**

(74) Vertreter: **Mertzlufft-Paufler, Cornelius et al**
**Maucher Jenkins**
**Patent- und Rechtsanwälte**
**Urachstraße 23**
**79102 Freiburg im Breisgau (DE)**

(56) Entgegenhaltungen:
| | |
|---|---|
| **EP-A1- 1 956 149** | **EP-A1- 2 048 422** |
| **EP-A1- 3 670 987** | **WO-A1-2019/099131** |
| **WO-A1-2020/247168** | **CN-B- 105 402 502** |
| **CN-U- 205 383 359** | **DE-A1- 2 557 996** |
| **DE-A1- 4 320 281** | **DE-U1-202012 100 489** |
| **DE-U1-202019 103 378** | **FR-A1- 3 035 171** |
| **US-A- 5 124 878** | **US-A1- 2007 209 728** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Schlauch mit einem Innenschlauch und einer Umflechtung.

Aus der US 2007/0209728 A1 ist ein Niederdruckschlauch zum Anschluss an Tauchflaschen bekannt.

Die DE 20 2012 100 489 U1 offenbart eine Schlauchleitungen zum Transport von flüssigen oder gasförmigen Medien, mit einer Schlauchfrist aus vernetzten Polyethylen, wobei die Schlauchschicht aufgrund eines fehlenden Vernetzungsschrittes einen Vernetzungsgrad von dauerhaft weniger als 60 % aufweist.

Aus CN 205383359 U ist ein biegsames Rohr mit einem Innenrohr beschrieben.

Die Gebrauchsmusterschrift DE 20 2019 103 378 U1 offenbart ein flexibles Rohr für Heizungsanlagen, dass eine Vielzahl von radial angeordneten Schichten umfasst.

Aus EP 2 048 422 A1 ist ein umflochtener Schlauch mit metallischer Optik bekannt.

Aus DE 43 20 281 A1 ist ein thermoplastischer elastomerer Schlauch bekannt.

In EP 1 956 149 ist ein insbesondere als Brauseschlauch ausgebildeter Schlauch mit Umspritzung beschrieben.

Die Erfindung betrifft weiter eine Schlauchanordnung mit einem Schlauchnippel und einem Schlauch, wobei der Schlauchnippel in einem Einsteckbereich des Schlauches angeordnet ist.

Aus der amerikanischen Patentschrift US 5,12 4,878 ist eine leichtgewichtige Schlauchanordnung für den Transport von Kraftstoffen und anderen korrosiven Flüssigkeiten beschrieben. In DE 25 57 996 A1 ist eine lösbare Anschlussverbindung für Hydraulik- und/oder Pneumatik-leitungen beschrieben.

Die Erfindung betrifft schließlich ein Verfahren zur Herstellung einer Schlauchanordnung, wobei ein Schlauchnippel in einen Schlauch gesteckt wird.

Aus CN 105402502 B ist ein Verfahren zur Herstellung eines wärmeisolierenden Heiz-/Kühlrohrs aus Kunststoff bekannt. Dieses Dokument offenbart ein flexibles Rohr, mit einem Innenschlauch und einer Umflechtung , wobei der Innenschlauch aus einem unvernetzten, thermoplastischen Material (PE-RT) besteht.

Ein Verfahren zur Herstellung einer Dichtung in einem Endstück einer flexiblen Leitung mit einem Druckmantel ist in FR 3 035 171 A1 beschrieben.

Schläuche, insbesondere Anschlussschläuche, mit Umflechtung sind bekannt. Hierbei dient die Umflechtung dazu, ein Bersten eines flexiblen Innenschlauches zu vermeiden, eine geforderte Zugfestigkeit zu gewährleisten und/oder den Innenschlauch vor Beschädigungen zu schützen.

Der Erfindung liegt die Aufgabe zugrunde, einen Schlauch mit verbesserten Fertigungs- und/oder Gebrauchseigenschaften zu schaffen.

Zur Lösung der Aufgabe sind erfindungsgemäß die Merkmale von Anspruch 1 vorgesehen. Insbesondere wird somit zur Lösung der genannten Aufgabe erfindungsgemäß bei einem Schlauch der eingangs beschriebenen Art vorgeschlagen, dass der Innenschlauch aus einem unvernetzten, thermoplastischen Material besteht, wobei der Innenschlauch (2) aus PE-RT mit einem Schmelzindex (190°C/2,16kg) von 0,5 bis 2 g/10min und mit einer Dichte von 0,925 bis 0,960 g/cm$^3$ gefertigt ist. Es hat sich herausgestellt, dass diese Materialwahl besonders günstige Gebrauchseigenschaften hinsichtlich Flexibilität und Knickfestigkeit erreichbar macht.

Der Werkstoff PE-RT kann dabei als Polyethylen (PE) mit erhöhter Temperaturbeständigkeit (Raised Temperature Resistance, RT), beispielsweise nach DIN EN ISO 22391-2:2010-04, Abschnitt 4 als Typ I oder Typ II, charakterisiert werden.

Der Schmelzindex kann beispielsweise gemäß ASTM D1238 oder ISO 1133 definiert sein.

Besonders günstige Gebrauchseigenschaften lassen sich erreichen, wenn bei einer vorteilhaften Ausgestaltung der Innenschlauch mit einer Dichte von 0,929 bis 0,940 g/cm3, gefertigt ist.

Zur Lösung der genannten Aufgabe sind zusätzlich bei einem Schlauch der eingangs beschrieben Art erfindungsgemäß vorgeschlagen, dass ein Außendurchmesser D des Innenschlauchs, angegeben und gemessen in mm, und eine Wandstärke s des Innenschlauchs, angegeben und gemessen in mm, folgendes erfüllen

$$A \leq 10.000 * s / D^{1,5}$$

und

$$10.000 * s / D^{1,5} \leq B,$$

wobei A>=390 1/mm$^{0,5}$, vorzugsweise A=425 1/mm$^{0,5}$, und B<=585 1/mm$^{0,5}$, vorzugsweise B=565 1/mm$^{0,5}$ ist. Diese Parameterwahl ist besonders vorteilhaft für die Erreichung einer guten Knickfestigkeit.

Bei einer vorteilhaften Ausgestaltung kann vorgesehen sein, dass der Außendurchmesser D des Innenschlauchs (2) < 10mm, vorzugsweise <9 mm oder <7 mm ist. In Verbindung mit der Umflechtung können somit besonders zugfeste und flexible Schläuche in handelsüblichen Ausformungen realisiert werden.

Bei einer vorteilhaften Ausgestaltung kann vorgesehen sein, dass die Umflechtung den Innenschlauch entlang seines gesamten Umfangs und/oder über eine Länge der Umflechtung kontaktiert. Somit kann eine Knickfestigkeit erhöht werden, insbesondere für die zuvor genannten Bereiche von Außendurchmesser D und Wandstärke s. Die Erfindung hat erkannt, dass eine enge Umflechtung verhindert, dass ein Querschnitt des Innenschlauchs beim Biegen zu oval wird, was ein Knicken begünstigen würde.

Bei einer vorteilhaften Ausgestaltung kann vorgesehen sein, dass die Umflechtung einen Flechtwinkel zwischen 41° und 55° aufweist. Somit ergibt sich eine gute Balance zwischen Zugfestigkeit und Berstdruckfestigkeit.

Der Flechtwinkel kann beispielsweise durch einen Winkel zwischen dem Monofil und einer Längsrichtung (z.B. Schlauchachse) in einer (gedanklich) abgewickelten Umflechtung charakterisiert werden.

Allgemein bezeichnen die folgenden Kenngrößen:

| | |
|---|---|
| Core [mm] | den Außendurchmesser des Inliners |
| Dwire [mm] | den Durchmesser eines einzelnen Filaments |
| #Wires | die Anzahl der Filamente pro Strang |
| Pitch [mm] | die Schlaglänge oder die axiale Länge einer vollständigen Windung eines Filaments um den Inliner des Schlauchs |
| #Bobbins | die Anzahl der Klöppel der Flechtmaschine zur Aufnahme jeweils einer Flechtspule, auf welcher ein Strang aus Einzelfilamenten aufgespult wurde. |

Der Flechtwinkel ("BraidAngle") berechnet sich dann wie folgt:

$$BraidAngle = \arctan \frac{\pi * (Core + 2 * Dwire)}{Pitch}$$

Erfindungsgemäß ist ferner vorgesehen , dass die Umflechtung eine Überdeckung zwischen 75% und 99% aufweist. Somit ergibt sich eine gute Balance zwischen einer Knickfestigkeit und einer Flexibilität.

Die Überdeckung kann beispielsweise durch das Verhältnis von einem Flächeninhalt einer durch Monofile abgedeckten Fläche zu einer die Monofile und die Zwischenräume zwischen diesen enthaltenden Gesamtfläche in einer (gedanklich) abgewickelten Umflechtung charakterisiert werden.

Die Überdeckung ("Coverage") berechnet sich mit den obigen Definitionen wie folgt:

$$Coverage = 2 * Bfactor - Bfactor^2 \quad \text{mit} \quad Bfactor = \frac{Dwire * \#Wires * \#Bobbins}{2 * Pitch * \sin(BraidAngle)}$$

Besonders bevorzugt ist/sind ein Flechtwinkel zwischen 43° und 49° und/oder eine Überdeckung zwischen 84% und 93%. Es hat sich herausgestellt, dass für diesen Wertebereich die Gebrauchseigenschaften bezüglich Zugfestigkeit und Berstdruckfestigkeit und/oder bezüglich Knickfestigkeit und Flexibilität besonders gut sein können.

Bei einer vorteilhaften Ausgestaltung kann vorgesehen sein, dass die Umflechtung mit einem Kunststoff-Monofil mit einem Durchmesser von 0,14 mm bis 0,50 mm gebildet ist. Somit sind Umflechtungen erreichbar, die eine gute Flexibilität sicherstellen bei gleichzeitiger Festigkeit gegen Zugbeanspruchung (entlang einer Längsachse) oder gegen Innendruck- oder Berstbeanspruchung.

Bevorzugt liegt der Durchmesser im Bereich von 0,20 mm bis 0,3 mm. Besonders gute Gebrauchseigenschaften ergeben sich bei einem Durchmesser von 0,25 mm±0,025 mm.

Insbesondere kann vorgesehen sein, dass das Kunststoff-Monofil aus Polyamid oder Polyester gefertigt ist. Somit liegen preisgünstige Materialien mit guten Verarbeitungseigenschaften bereit.

Bei einer vorteilhaften Ausgestaltung kann vorgesehen sein, dass die Umflechtung mit einem Edelstahl-Monofil mit einem Durchmesser von 0,14 mm bis 0,50 mm gebildet ist. Die Erfindung ermöglicht somit auch die Bildung eines Schlauches mit metallischer Umflechtung. Bei den angegebenen Werten sind gute Gebrauchseigenschaften erreichbar.

Bevorzugt liegt der Durchmesser im Bereich von 0,16 mm bis 0,2 mm. Besonders gute Gebrauchseigenschaften ergeben sich bei einem Durchmesser von 0,18 mm ± 0,01 mm.

Bei einer vorteilhaften Ausgestaltung ist vorgesehen eine Schlauchanordnung, mit einem Schlauchnippel und einem Schlauch mit einem Innenschlauch, wie zuvor beschrieben oder nachfolgend beansprucht, wobei der Schlauchnippel in einem Einsteckbereich des Schlauches, insbesondere des Innenschlauches, angeordnet ist und wobei ein Außendurchmesser des Schlauchnippels im Einsteckbereich wenigstens so groß ist wie eine Summe aus lichtem Innendurchmesser des Schlauches (beispielsweise eines Innenschlauchs des Schlauchs), gemessen außerhalb des Einsteckbereichs, und einer Wandstärke einer den lichten Innendurchmesser begrenzenden Wandung. Somit ist bei einer erhöhten Wandstärke des Innenschlauches ein ausreichend großer Innendurchmesser des Schlauchnippels erreichbar, ohne eine Stabilität des Schlauchnippels bei mechanischer Belastung - beispielsweise im Crimpvorgang - zu gefährden.

Bevorzugt ist der Außendurchmesser des Schlauchnippels im Einsteckbereich wenigstens so groß wie die Summe aus lichtem Innendurchmesser des Schlauches (beispielsweise eines Innenschlauchs des Schlauchs), gemessen außerhalb des Einsteckbereichs, und dem 1,0-, 1,1-, 1,2-, 1,3- oder 1,4-fachen der Wandstärke der Wandung. Hier ergeben sich besonders günstige Innendurchmesser am Schlauchnippel bei gleichzeitiger ausreichender mechanischer Stabilität des Schlauchnippels. Bei einer vorteilhaften Ausgestaltung kann vorgesehen sein, dass der Schlauch einen Innenschlauch hat und die Wandung eine Innenschlauchwandung ist. Somit kann der Schlauchnippel beim Einstecken eine Aufweitung des Innenschlauches definieren, die den Innendurchmesser des Schlauchnippels - beispielsweise als größtes Strömungshindernis - nicht zu sehr beschränkt. Der Innenschlauch kann von einer Umflechtung eingefasst sein, beispielsweise um einen bereits beschriebenen Schlauch zu bilden.

Zur Lösung der genannten Aufgabe sind ergänzend die Merkmale des ersten nebengeordneten, auf eine Schlauchanordnung gerichteten Anspruchs vorgesehen. Insbesondere wird somit bei einer Schlauchanordnung der eingangs beschriebenen Art vorgeschlagen, dass ein Außendurchmesser des Schlauchnippels im Einsteckbereich wenigstens so groß ist wie eine Summe aus lichtem Innendurchmesser des Schlauches (beispielsweise eines Innenschlauchs des Schlauchs), gemessen außerhalb des Einsteckbereichs, und einer Wandstärke einer den lichten Innendurchmesser begrenzenden Wandung. Somit ist bei einer erhöhten Wandstärke des Innenschlauches ein ausreichend großer Innendurchmesser des Schlauchnippels erreichbar, ohne eine Stabilität des Schlauchnippels bei mechanischer Belastung - beispielsweise im Crimpvorgang - zu gefährden.

Bevorzugt ist der Außendurchmesser des Schlauchnippels im Einsteckbereich wenigstens so groß wie die Summe aus lichtem Innendurchmesser des Schlauches (beispielsweise eines Innenschlauchs des Schlauchs), gemessen außerhalb des Einsteckbereichs, und dem 1,0-, 1,1-, 1,2-, 1,3- oder 1,4-fachen der Wandstärke der Wandung. Hier ergeben sich besonders günstige Innendurchmesser am Schlauchnippel bei gleichzeitiger ausreichender mechanischer Stabilität des Schlauchnippels.

Besonders günstig ist es dabei, wenn hierbei der Schlauch erfindungsgemäß, insbesondere wie zuvor beschrieben und/oder nach einem der auf einen Schlauch gerichteten Ansprüche, ausgestaltet ist. Somit lassen sich die Vorteile der Materialwahl des Innenschlauches auch in diesem Fall nutzen.

Ferner ist erfindungsgemäß bei einer Schlauchanordnung vorgesehen, dass der Schlauchnippel an seinem Einsteckende eine in Einsteckrichtung orientierte Stirnfläche aufweist, wobei die Stirnfläche einen Außendurchmesser $d2$ aufweist, der gleich groß oder größer als ein lichter Innendurchmesser $di$ des Schlauches außerhalb des Einsteckbereichs ist. Hierbei kann ein Außendurchmesser beispielsweise als gleich groß zu einem Innendurchmesser angesehen werden, wenn sich die Toleranzbereiche aus der Fertigung zumindest teilweise oder sogar vollständig überlappen. Ist der Innendurchmesser gleich groß zu dem Außendurchmesser, so fehlt beispielsweise der sonst übliche Fügespalt von etwa 4/10 mm, so dass die Stirnfläche zwar gerade so in den Schlauch einführbar sein kann, nicht jedoch in einem maschinellen Verfahren.

Besonders günstig ist es hier, wenn an einem freien Ende des Schlauchnippels ein Fortsatz ausgebildet ist, der den Außendurchmesser über einen Axialbereich hinweg einhält. Es ist so eine Einführhilfe ausbildbar.

Die Erfahrung zeigt, dass erst ab einem Fügespalt von mehr als 4/10 mm zwischen Innenschlauch und Schlauchnippel ein Einstecken in einer industriellen Massenfertigung prozesssicher möglich ist. Die Verwendung eines Fügespaltes hat zur Folge, dass ein Innendurchmesser des Schlauchnippels kleiner als technisch erforderlich ist, wodurch ein Strömungswiderstand des Schlauchnippels unnötig groß ist.

Alternativ oder zusätzlich hat die Verwendung eines Fügespaltes zur Folge, dass ein Außendurchmesser des (Innen-)Schlauches größer ist als technisch erforderlich, wodurch eine Knickstabilität unnötig gering ist. Es hat sich gezeigt, dass eine Abstimmung von $di$ und $d2$, die mit den (überlappenden) Toleranzbereichen einen Fügespalt von weniger als 4/10 mm lässt oder die ein Übermaß bildet, vorteilhafte Eigenschaften ergibt.

Die Stirnfläche kann hierbei eine ebene Fläche definieren oder in einem Axialschnitt eine (konvex) gebogene Kontur aufweisen. Die gebogene Kontur kann beim Einsteckvorgang behilflich sein, während die ebene Fläche einen definierten Abschluss festlegt. Die Stirnfläche kann hierbei beispielsweise als eine axiale Projektion einer Außenfläche des Schlauchnippels bis zur ersten Halterippe auf eine Radialebene in Bezug auf eine Einsteckrichtung des Schlauchnippels definiert sein. Die Radialebene kann hierbei beispielsweise als die Ebene charakterisiert sein, die senkrecht auf einer Längsrichtung (z.B. einer Schlauchachse) steht.

Zur Lösung der genannten Aufgabe sind ergänzend die Merkmale des zweiten nebengeordneten, auf eine Schlauchanordnung gerichteten Anspruchs vorgesehen. Insbesondere wird somit bei einer Schlauchanordnung der eingangs beschriebenen Art vorgeschlagen, dass der Schlauch an seinem Einsteckende thermisch, insbesondere mit einem auf mindestens eine Vicat-Erweichungstemperatur aufgeheizten Dorn, aufgeweitet ist. Die Vicat-Erweichungstemperatur kann beispielsweise als VST/A/50 nach DIN EN ISO 306 definiert werden.

Vorzugsweise erfolgt die Aufheizung auf eine Temperatur, die wenigstens 30 K oder 50 K über der Vicat-Erweichungstemperatur liegt. Somit kann erreicht werden, dass auch das Material des Innenschlauches auf dem Dorn in die Nähe der oder über die Vicat-Erweichungstemperatur gebracht wird. Somit ist eine plastische Verformung beim Einstecken oder Einpressen leicht ausbildbar.

Zur Lösung der genannten Aufgabe ist ebenfalls ein Verfahren nach Anspruch 11 vorgesehen. Insbesondere wird somit bei einem Verfahren der eingangs beschriebenen Art erfindungsgemäß vorgeschlagen, dass ein Innendurchmesser des Schlauchs vor dem und/oder beim Einstecken des Schlauchnippels thermisch, insbesondere mit einem auf mindestens eine Vicat-Erweichungstemperatur, vorzugsweise auf eine Temperatur, die wenigstens 30 K oder 50 K über der Vicat-Erweichungstemperatur (z.B. VST/A/50) liegt, aufgeheizten Dorn, aufgeweitet wird. Somit ist ein Herstellverfahren für eine Schlauchanordnung beschrieben. Das Aufheizen des Schlauches kann die Unterdrückung von Rissbildungen im Innenschlauch ergeben.

Bei einer vorteilhaften Ausgestaltung kann vorgesehen sein, dass der Dorn in einen Einschiebebereich des Schlauches eingeschoben wird, wobei der Schlauch außenseitig in dem Einschiebebereich gehalten wird.

Alternativ kann vorgesehen sein, dass der Schlauch teilweise oder ganz außerhalb des Einschiebebereichs gehalten wird. Hierdurch kann eine besonders günstige Aufweitung zum Einstecken des Schlauchnippels erreichbar sein.

Bei einer vorteilhaften Ausgestaltung kann vorgesehen sein, dass vor dem Aufweiten eine Crimphülse aufgesteckt wird. Somit kann ein unerwünschtes Aufspleißen der Umflechtung bei der Montage vermeidbar sein.

Eine bevorzugte Anwendung des Schlauches und der Schlauchanordnung ist der sanitäre Schlauch, beispielsweise als Anschlussschlauch.

Somit kann eine Baureihe von Schlauchanordnungen realisiert werden, umfassend wenigstens zwei Varianten, die jeweils eine erfindungsgemäße Schlauchanordnung, insbesondere wie zuvor beschrieben und/oder nach einem der auf eine Schlauchanordnung gerichteten Ansprüche, darstellen und/oder die in einem erfindungsgemäßen Verfahren, insbesondere wie zuvor beschrieben und/oder nach einem der auf ein Verfahren gerichteten Ansprüche, hergestellt sind. Insbesondere kann somit erreichen, dass alle Varianten in dem formalhaft definierten Bereich liegen und somit einen guten Kompromiss zwischen Knickfestigkeit und Flexibilität erreichen, insbesondere wobei die Knickfestigkeit durch die Umflechtung verbessert ist.

Hierbei kann vorgesehen sein, dass die Innenschläuche der Varianten voneinander abweichende Außendurchmesser D haben. Es sind somit Baureihen bildbar, die Varianten mit unterschiedlichen Durchflussklassen und/oder unterschiedlichem Platzbedarf haben.

Alternativ oder zusätzlich kann vorgesehen sein, dass die Innenschläuche der Varianten Außendurchmesser D von weniger als 10 mm, weniger als 9 mm oder weniger als 7 mm haben. Es sind somit Baureihen bildbar, die Varianten haben, die sich besonders gut im Küchenbereich und/oder im Duschbereich einsetzen lassen.

Die Erfindung wird nun anhand von Ausführungsbeispielen näher beschrieben, ist aber nicht auf diese Ausführungsbeispiele beschränkt.

Es zeigt:

Fig. 1    einen erfindungsgemäßen Schlauch bei einer erfindungsgemäßen Schlauchanordnung in einem Axialschnitt,

Fig. 2    ein erfindungsgemäßes Verfahren zur Herstellung einer Schlauchanordnung,

Fig. 3    ein weiteres erfindungsgemäßes Verfahren zur Herstellung einer Schlauchanordnung, wobei der Schlauch unterhalb eines Einschiebebereichs für einen Dorn gehalten wird,

Fig. 4    ein drittes erfindungsgemäßes Verfahren zur Herstellung einer Schlauchanordnung, wobei vor dem Aufweiten eine Crimphülse aufgesetzt wird, und

Fig. 5    eine teilweise axial aufgeschnittene Detaildarstellung eines Teils einer erfindungsgemäßen Schlauchanordnung (rechts) und des zugehörigen Schlauchnippels in Einzeldarstellung (links).

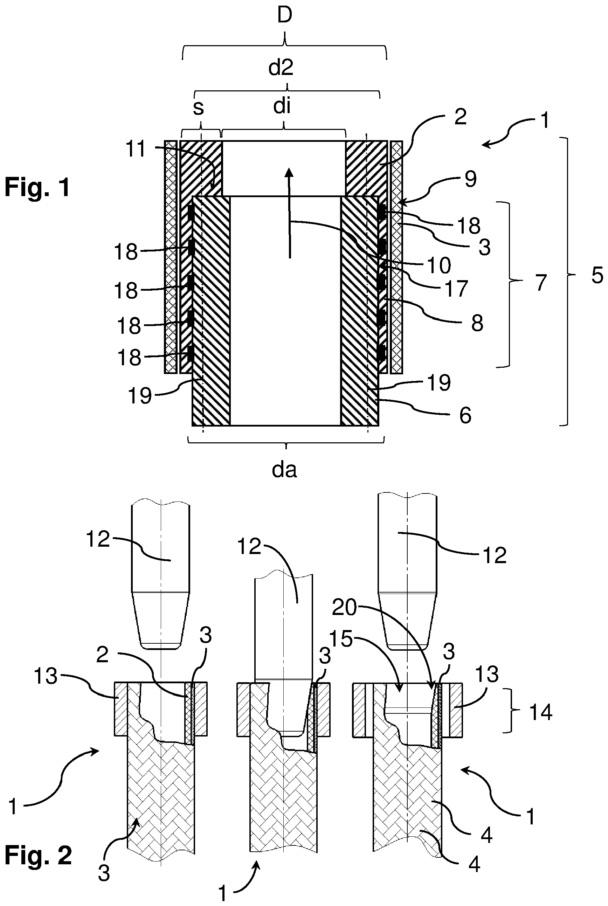

Fig. 1 zeigt in stark schematisierter Form zur Erläuterung des Erfindungsgedankens einen im Ganzen mit 1 bezeichneten Schlauch, der mit einem Innenschlauch 2 aus einem unvernetzten, thermoplastischen Material und einer außenseitig auf dem Innenschlauch 2 aufgebrachten Umflechtung 3 versehen ist.

Der Innenschlauch 2 besteht erfindungsgemäss aus PE-RT und hat einem Schmelzindex (190°/2,16kg) von 0,5 bis 2 g/10min sowie eine Dichte 0,929 bis 0,940 g/cm$^3$.

Der Innenschlauch 2 hat im gezeigten Ausführungsbeispiel einen Außendurchmesser D und eine Wandstärke s.

Es gilt für D und s in mm:

$$A \leq 10.000 * s / D^{1,5} \text{ und } 10.000 * s / D^{1,5} \leq B,$$

wobei A=425 $1/mm^{0,5}$, und B =565 $1/mm^{0,5}$ ist. Bei anderen Ausführungsbeispielen sind die Werte anders gewählt, beispielsweise im Bereich A>=390 $1/mm^{0,5}$, vorzugsweise A=425 $1/mm^{0,5}$, und/oder B<=585 $1/mm^{0,5}$, vorzugsweise B=565 $1/mm^{0,5}$.

Es sind somit Baureihen von Schlauchanordnungen, umfassend wenigstens zwei Varianten, die jeweils wie beschrieben ausgebildet sind und die oben aufgeführten Relationen einhalten, bildbar.

Hierbei kann vorgesehen sein, dass bei einer ersten Variante der Außendurchmesser D weniger als 10 mm, bei einer zweiten Variante weniger als 9 mm und/oder bei einer dritten Variante weniger als 7 mm beträgt. Erste Variante, zweite Variante und/oder dritte Variante können auch entfallen, so dass nur zwei der drei Varianten verbleiben.

Die Umflechtung 3 hat im gezeigten Ausführungsbeispiel einen Flechtwinkel zwischen 43° und 49° und eine Überdeckung zwischen 84% und 93%. Bei anderen Ausführungsbeispielen sind die Werte anders gewählt, beispielsweise ein Flechtwinkel zwischen 41° und 55° und/oder eine Überdeckung zwischen 75% und 99%.

In einer ersten Variante ist die Umflechtung 3 mit einem Monofil 4 (vgl. Fig. 2) aus Kunststoff gebildet, beispielsweise aus Polyamid oder Polyester. Der Durchmesser des Monofils 4 beträgt 0,25±0,025 mm. Bei weiteren Ausführungsbeispielen hat das Monofil einen anderen Durchmesser, beispielsweise im Bereich 0,14 mm bis 0,50 mm, insbesondere von 0,20 mm bis 0,3 mm.

In einer zweiten Variante ist die die Umflechtung 3 mit einem Edelstahl-Monofil mit einem Durchmesser von 0,18 mm ±0,01 mm gebildet. Bei weiteren Ausführungsbeispielen hat das Monofil einen anderen Durchmesser, beispielsweise im Bereich 0,14 mm bis 0,50 mm, insbesondere von 0,16 mm bis 0,2 mm.

Zur Bildung einer erfindungsgemäßen Schlauchanordnung 5 ist im gezeigten Ausführungsbeispiel ein Schlauchnippel 6 in den Schlauch 1, hier beispielsweise den Innenschlauch 2, gesteckt und in einem Einsteckbereich 7 angeordnet.

Ein Außendurchmesser *da* des Schlauchnippels 6 ist im Einsteckbereich 7 wenigstens so groß wie eine Summe aus einem lichten Innendurchmesser *di* des Schlauches 1 (hier des Innenschlauches 2), gemessen außerhalb des Einsteckbereichs 7, und einer Wandstärke s einer den lichten Innendurchmesser *di* begrenzenden Wandung 8, hier der Wandung des Innenschlauches 2 als Innenschlauchwandung. Der Schlauchnippel 6 ragt somit auf jeder Seite über die Hälfte der Wandstärke s, also über die Mittenlinie 19 des Materials der Wandung 8, in den unverformten Innenschlauch 2 (also außerhalb des Einsteckbereichs 7) hinein.

Der Schlauchnippel 6 weist an seinem Einsteckende 9 eine in Einsteckrichtung 10 orientierte Stirnfläche 11 auf. Die Stirnfläche 11 kann hierbei beispielsweise als eine axiale Projektion einer Außenfläche 17 des Schlauchnippels 6 bis zu einer ersten Halterippe 18 auf eine Radialebene in Bezug auf eine Einsteckrichtung des Schlauchnippels definiert sein, oder als die ebene, axial ausgerichtete Fläche. Hat der Schlauchnippel (bei einem weiteren Ausführungsbeispiel) eine konische Außenform, so kann daher der erste Abschnitt des Anstiegs auf dem Konus bis zur ersten Halterippe zur Stirnfläche gezählt werden, oder es zählt nur die Axialfläche am freien Ende 21 als Stirnfläche 11.

Die Stirnfläche 11 weist einen Außendurchmesser *d2* auf, der größer als ein lichter Innendurchmesser *di* des Schlauches außerhalb des Einsteckbereichs 7 ist. Dies hat zur Folge, dass es sehr schwierig bis unmöglich ist, den Schlauchnippel 6 in den unbehandelten Innenschlauch 2 einzupressen.

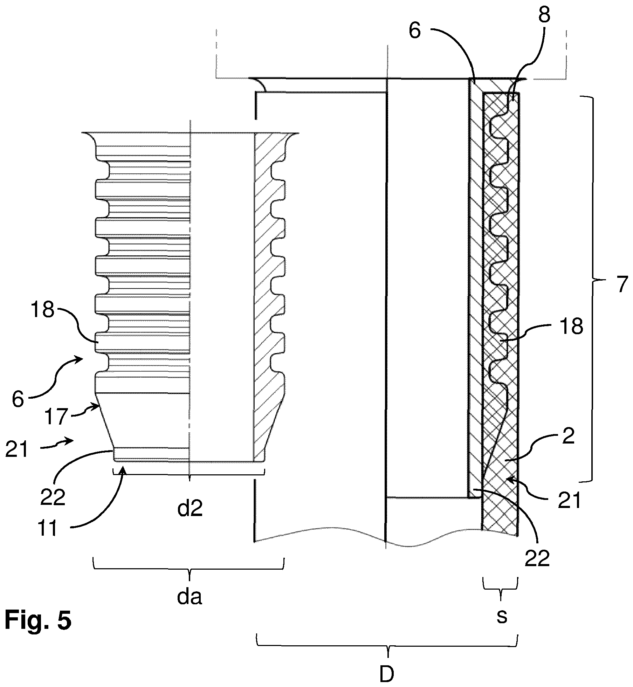

Bei einem weiteren Ausführungsbeispiel gemäß Fig. 5 ist der Außendurchmesser *d2* der Stirnfläche 11 genau gleich dem lichten Innendurchmesser *di* des (Innen-)Schlauches 2 außerhalb des Einsteckbereichs, also des undeformierten Schlauches. Berücksichtigt man die Toleranzbereiche des Schlauchnippels 6 und des Innenschlauches 2, die sich überlappen, so wird der Innendurchmesser *di* manchmal geringfügig größer oder geringfügig kleiner als der Außendurchmesser *d2* sein. Dies zeigt, dass es erforderlich ist, den Innenschlauch 2 vor Einstecken des Schlauchnippels aufzuweiten, auch wenn d2<di gilt.

Während sich in Fig. 1 *da* und *d2* nur um eine Höhe der Halterippen 18 unterscheiden, ist hier *da* wesentlich größer als *d2*, da sich der Schlauchnippel 6 an seinem freien Ende 21 zu einem (hülsenförmigen) Fortsatz 22 verjüngt.

Im Übrigen sind funktionell und/oder konstruktiv zu Fig. 1 bis 4 gleichartige oder identische Bauteile und Funktionseinheiten mit denselben Bezugszeichen bezeichnet und nicht noch einmal gesondert beschrieben. Die Ausführungen zu Fig. 1 bis Fig. 4 gelten somit entsprechend.

Fig. 2 zeigt ein erfindungsgemäßes Herstellungsverfahren.

Ein Dorn 12 wird aufgeheizt (links) auf eine Temperatur, die wenigstens 50 K über der Vicat-Erweichungstemperatur des Materials des Innenschlauches 2 liegt.

Der Schlauch 1 wird an seinem Einsteckende 9 thermisch mit dem Dorn 12 aufgeweitet (Mitte).

Dabei wird der Schlauch 1 außenseitig mit Haltebacken 13 gehalten.

Die Haltebacken 13 sind hierbei so platziert, dass Sie den Schlauch 1 in einem Einschiebebereich 14 umschließen und abstützen.

Anschließend werden die Haltebacken 13 wieder entfernt, und der Dorn 12 wird herausgezogen (rechts).

Es verbleibt eine plastisch geformte Aufweitung 15, in die sich der Schlauchnippel 6 gut einpressen lässt. Die Umflechtung 3 weitet sich nicht auf.

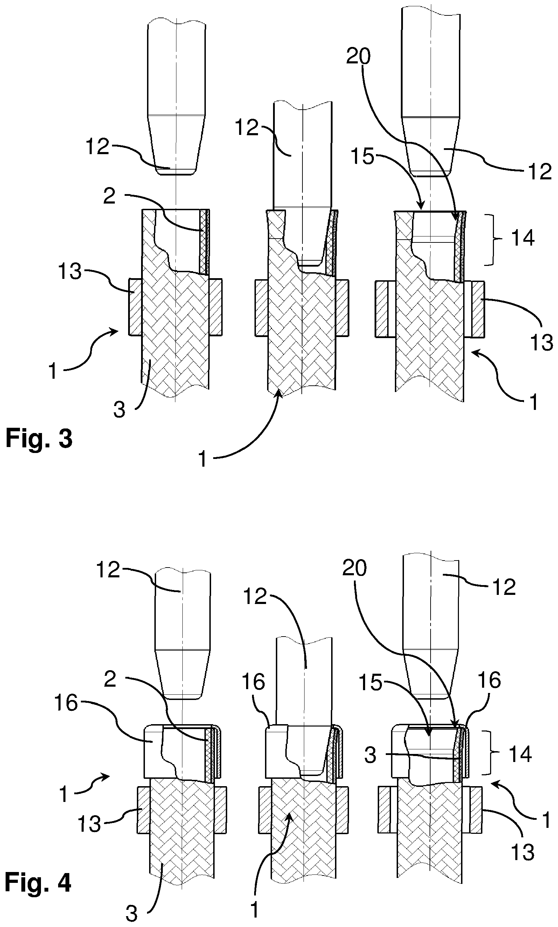

Fig. 3 zeigt ein weiteres erfindungsgemäßes Verfahren. Konstruktiv oder funktionell zu dem vorangehenden Ausführungsbeispiel gleichartige oder identische Bauteile und Funktionseinheiten sind mit denselben Bezugszeichen bezeichnet und nicht gesondert beschrieben. Die Ausführungen zu den Fig. 1 und 2 gelten daher hier entsprechend.

Das Ausführungsbeispiel nach Fig. 3 unterscheidet sich von demjenigen nach Fig. 2 dadurch, dass die Haltebacken 13 unterhalb des Einschiebebereichs 14 angeordnet sind.

Dies hat zur Folge, dass sich auch die Umflechtung 3 unter dem Einfluss des Dorns 12 aufweitet. Der Innenschlauch 2 wird somit in der Anfasung 20 weniger angefast als in der Situation nach Fig. 2.

Fig. 4 zeigt ein weiteres erfindungsgemäßes Verfahren. Konstruktiv oder funktionell zu dem vorangehenden Ausführungsbeispiel gleichartige oder identische Bauteile und Funktionseinheiten sind mit denselben Bezugszeichen bezeichnet und nicht gesondert beschrieben. Die Ausführungen zu den Fig. 1 bis 3 gelten daher hier entsprechend.

Das Ausführungsbeispiel nach Fig. 4 unterscheidet sich von demjenigen nach Fig. 3 dadurch, dass vor dem Aufweiten eine Crimphülse 16 aufgesteckt wird. Somit die Umflechtung 3 im Einsteckende 9 fixiert.

Nach dem Herausziehen des Dorns 12 (Fig. 4, rechts) wird der Schlauchnippel 6 in die Aufweitung 15 eingesteckt und die Crimphülse 16 vercrimpt.

Bei einem Schlauch 1 wird somit erfindungsgemäß vorgeschlagen, einen Innenschlauch 2 aus einem unvernetzten, thermoplastischen Material herzustellen und den Innenschlauch 2 thermisch aufzuweiten.

**Bezugszeichenliste**

| | |
|---|---|
| 1 | Schlauch |
| 2 | Innenschlauch |
| 3 | Umflechtung |
| 4 | (Kunststoff-/Edelstahl-)Monofil |
| 5 | Schlauchanordnung |
| 6 | Schlauchnippel |
| 7 | Einsteckbereich |
| 8 | Wandung |
| 9 | Einsteckende |
| 10 | Einsteckrichtung |
| 11 | Stirnfläche |
| 12 | Dorn |
| 13 | Haltebacken |
| 14 | Einschiebebereich |
| 15 | Aufweitung |
| 16 | Crimphülse |
| 17 | Außenfläche |
| 18 | Halterippe |
| 19 | Mittenlinie |
| 20 | Anfasung |
| 21 | freies Ende |
| 22 | Fortsatz |
| D | Außendurchmesser D von 2 |
| s | Wandstärke von 2 |
| da | Außendurchmesser von 6 |
| di | Innendurchmesser von 2 |
| d2 | Außendurchmesser von 11 |

**Patentansprüche**

1.   Schlauch (1), mit einem Innenschlauch (2) und einer Umflechtung (3), wobei der Innenschlauch (2) aus einem unvernetzten, thermoplastischen Material besteht, wobei die Umflechtung (3) eine Überdeckung zwischen 75% und 99% aufweist, wobei der Innenschlauch (2) aus PE-RT mit einem Schmelzindex (190°C/2,16kg) von 0,5 bis 2 g/10min und mit einer Dichte von 0,925 bis 0,960 g/cm$^3$ gefertigt ist , wobei ein Außendurchmesser D des Innenschlauchs (2), angegeben und gemessen in mm, und eine Wandstärke s des Innenschlauchs (2), angegeben und gemessen in mm, folgendes erfüllen

$$A \leq 10.000 * s / D^{1,5}$$

und

$$10.000 * s / D^{1,5} \leq B,$$

wobei A>=390 1/mm$^{0,5}$, vorzugsweise A=425 1/mm$^{0,5}$, und B<=585 1/mm$^{0,5}$, vorzugsweise B=565 1/mm$^{0,5}$ ist.

2. Schlauch (1) nach Anspruch 1, wobei der Innenschlauch (2) mit einer Dichte von 0,929 bis 0,940 g/cm$^3$ gefertigt ist.

3. Schlauch (1) nach einem der vorangehenden Ansprüche, wobei der Außendurchmesser D des Innenschlauchs (2) < 10 mm, vorzugsweise <9 mm oder <7 mm ist und/oder dass die Umflechtung den Innenschlauch entlang seines gesamten Umfangs und/oder über eine Länge der Umflechtung kontaktiert.

4. Schlauch (1) nach einem der vorangehenden Ansprüche, mit einem Innenschlauch (2) und einer Umflechtung (3), wobei die Umflechtung (3) einen Flechtwinkel zwischen 41° und 55°, insbesondere zwischen 43° und 49°, und/oder die Überdeckung zwischen 84% und 93% aufweist.

5. Schlauch (1) nach einem der vorangehenden Ansprüche, wobei die Umflechtung (3) mit einem Kunststoff-Monofil (4), insbesondere aus Polyamid oder Polyester, mit einem Durchmesser von 0,14 mm bis 0,50 mm, insbesondere von 0,20 mm bis 0,3 mm, besonders vorzugsweise 0,25 mm±0,025 mm, gebildet ist.

6. Schlauch (1) nach einem der vorangehenden Ansprüche, wobei die Umflechtung mit einem Edelstahl-Monofil (4) mit einem Durchmesser von 0,14 mm bis 0,50 mm, insbesondere von 0,16 mm bis 0,2 mm, besonders vorzugsweise 0,18 mm±0,01 mm, gebildet ist.

7. Schlauchanordnung (5), mit einem Schlauchnippel (6) und einem Schlauch (1) mit einem Innenschlauch (2) nach einem der Ansprüche 1 bis 2, wobei der Schlauchnippel (6) in einem Einsteckbereich (7) des Schlauches (1), insbesondere des Innenschlauches (2), angeordnet ist, wobei ein Außendurchmesser (da) des Schlauchnippels (6) im Einsteckbereich (7) wenigstens so groß ist wie eine Summe aus einem lichten Innendurchmesser (di) des Schlauches (1), insbesondere des Innenschlauches (2), gemessen außerhalb des Einsteckbereichs (7), und einer Wandstärke (s) einer den lichten Innendurchmesser (di) begrenzenden Wandung (8), insbesondere dem 1,0-, 1,1-, 1,2-, 1,3- oder 1,4-fachen der Wandstärke (s) der Wandung (8).

8. Schlauchanordnung (5) nach Anspruch 7, wobei der Schlauch (1) einen Innenschlauch (2) hat und die Wandung (8) eine Innenschlauchwandung ist.

9. Schlauchanordnung (5), mit einem Schlauchnippel (6) und einem Schlauch (1) nach einem der Ansprüche 1 bis 3, wobei der Schlauchnippel (6) in einem Einsteckbereich (7) des Schlauches (1), insbesondere des Innenschlauches (2), angeordnet ist, wobei ein Außendurchmesser (da) des Schlauchnippels (6) im Einsteckbereich (7) wenigstens so groß ist wie eine Summe aus einem lichten Innendurchmesser (di) des Schlauches (1), insbesondere des Innenschlauches (2), gemessen außerhalb des Einsteckbereichs (7), und einer Wandstärke (s) einer den lichten Innendurchmesser (di) begrenzenden Wandung (8), insbesondere dem 1,0-, 1,1-, 1,2-, 1,3- oder 1,4-fachen der Wandstärke (s) der Wandung (8), wobei der Schlauchnippel (6) an seinem Einsteckende (9) eine in Einsteckrichtung (10) orientierte, e bene oder in einem Axialschnitt konvex gebogene Stirnfläche (11) aufweist, wobei die Stirnfläche (11) einen Außendurchmesser (*d2*) aufweist, der gleich groß oder größer als ein lichter Innendurchmesser (*di*) des Schlauches (1) außerhalb des Einsteckbereichs (7) ist.

10. Schlauchanordnung (5) nach einem der Ansprüche 7 bis 9, wobei der Schlauchnippel (6) in einem Einsteckbereich (7) des Schlauches (1) angeordnet ist, **dadurch gekennzeichnet, dass** der Schlauch (1) an seinem Einsteckende (9) thermisch, insbesondere mit einem auf mindestens eine Vicat-Erweichungstemperatur, vorzugsweise auf eine Temperatur, die wenigstens 30 K oder 50 K über der Vicat-Erweichungstemperatur liegt, aufgeheizten Dorn (12), aufgeweitet ist.

**11.** Verfahren zur Herstellung einer Schlauchanordnung (5), nach einem der Ansprüche 7 bis 10, wobei ein Schlauchnippel (6) in einen Schlauch (1) mit einem Innenschlauch (2) nach einem der Ansprüche 1 bis 6, gesteckt wird, wobei ein Innendurchmesser (di) des Schlauchs (1) vor dem und/oder beim Einstecken des Schlauchnippels (6) thermisch, insbesondere mit einem auf mindestens eine Vicat-Erweichungstemperatur, vorzugsweise auf eine Temperatur, die wenigstens 30 K oder 50 K über der Vicat-Erweichungstemperatur liegt, aufgeheizten Dorn (12), aufgeweitet wird.

**12.** Verfahren nach Anspruch 11, wobei der Dorn (12) in einen Einschiebebereich (14) des Schlauches (1) eingeschoben wird, wobei der Schlauch (1) außenseitig in dem Einschiebebereich (14) oder teilweise oder ganz außerhalb des Einschiebebereichs (14) gehalten wird.

**13.** Verfahren nach Anspruch 11 oder 12, wobei vor dem Aufweiten eine Crimphülse (16) aufgesteckt wird.

**14.** Baureihe von Schlauchanordnungen, umfassend wenigstens zwei Varianten, die jeweils eine Schlauchanordnung nach einem der Ansprüche 1 bis 10 sind und/oder in einem Verfahren nach einem der Ansprüche 11 bis 13 hergestellt sind, insbesondere wobei die Innenschläuche der Varianten voneinander abweichende Außendurchmesser D und/oder Außendurchmesser D von weniger als 10 mm, weniger als 9 mm oder weniger als 7 mm haben.

**Claims**

**1.** Hose (1), having an inner hose (2) and a braid (3), wherein the inner hose (2) consists of an uncrosslinked, thermoplastic material, wherein the braid (3) has a coverage between 75% and 99%, wherein the inner hose (2) is manufactured from PE-RT having a melt flow index (190°C/2.16 kg) of 0.5 to 2 g/10 min and having a density of 0.925 to 0.960 $g/cm^3$, wherein an outer diameter D of the inner hose (2), given and measured in mm, and a wall thickness s of the inner hose (2), given and measured in mm, satisfy the following:

$$A \leq 10\ 000 * s\ /\ D^{1.5}$$

and

$$10\ 000 * s\ /\ D^{1.5} \leq B,$$

wherein A >= 390 $1/mm^{0.5}$, preferably A = 425 $1/mm^{0.5}$, and B <= 585 $1/mm^{0.5}$, preferably B = 565 $1/mm^{0.5}$.

**2.** Hose (1) according to Claim 1, wherein the inner hose (2) is manufactured with a density of 0.929 to 0.940 $g/cm^3$.

**3.** Hose (1) according to either of the preceding claims, wherein the outer diameter D of the inner hose (2) < 10 mm, preferably < 9 mm or < 7 mm, and/or in that the braid makes contact with the inner hose along its entire circumference and/or over a length of the braid.

**4.** Hose (1) according to one of the preceding claims, having an inner hose (2) and a braid (3), wherein the braid (3) has a braid angle between 41° and 55°, in particular between 43° and 49°, and/or the coverage is between 84% and 93%.

**5.** Hose (1) according to one of the preceding claims, wherein the braid (3) is made with a plastic monofilament (4), in particular of polyamide or polyester, having a diameter of 0.14 mm to 0.50 mm, in particular of 0.20 mm to 0.3 mm, particularly preferably 0.25 mm ± 0.025 mm.

**6.** Hose (1) according to one of the preceding claims, wherein the braid is made with a stainless steel monofilament (4) having a diameter of 0.14 mm to 0.50 mm, in particular of 0.16 mm to 0.2 mm, particularly preferably 0.18 mm ± 0.01 mm.

**7.** Hose arrangement (5), having a hose nipple (6) and a hose (1) having an inner hose (2) according to either of Claims 1 to 2, wherein the hose nipple (6) is arranged in a plug-in region (7) of the hose (1), in particular of the inner hose (2), wherein an outer diameter (da) of the hose nipple (6) in the plug-in region (7) is at least as great as a sum of a clear inner diameter (di) of the hose (1), in particular of the inner hose (2), measured outside of the plug-in region (7), and a wall thickness (s) of a wall (8) delimiting the clear inner diameter (di), in particular 1.0, 1.1, 1.2, 1.3, or 1.4 times the wall thickness (s) of the wall (8).

8. Hose arrangement (5) according to Claim 7, wherein the hose (1) has an inner hose (2) and the wall (8) is an inner hose wall.

9. Hose arrangement (5), having a hose nipple (6) and a hose (1) according to one of Claims 1 to 3, wherein the hose nipple (6) is arranged in a plug-in region (7) of the hose (1), in particular of the inner hose (2), wherein an outer diameter (*da*) of the hose nipple (6) in the plug-in region (7) is at least as great as a sum of a clear inner diameter (*di*) of the hose (1), in particular of the inner hose (2), measured outside of the plug-in region (7), and a wall thickness (*s*) of a wall (8) delimiting the clear inner diameter (*di*), in particular 1.0, 1.1, 1.2, 1.3 or 1.4 times the wall thickness (*s*) of the wall (8), wherein the hose nipple (6), at its plug-in end (9), has an end face (11) which is oriented in the plug-in direction (10) and is planar or convexly curved in an axial portion, wherein the end face (11) has an outer diameter (*d2*) which is the same or greater than a clear inner diameter (di) of the hose (1) outside of the plug-in region (7).

10. Hose arrangement (5) according to one of Claims 7 to 9, wherein the hose nipple (6) is arranged in a plug-in region (7) of the hose (1), **characterized in that** the hose (1), at its plug-in end (9), is widened by a thermal treatment, in particular using a mandrel (12) heated to at least a Vicat softening temperature, preferably to a temperature at least 30 K or 50 K above the Vicat softening temperature.

11. Method for producing a hose arrangement (5), according to one of Claims 7 to 10, wherein a hose nipple (6) is plugged into a hose (1) having an inner hose (2) according to one of Claims 1 to 6, wherein, before and/or during the plugging in of the hose nipple (6), an inner diameter (*di*) of the hose (1) is widened by a thermal treatment, in particular using a mandrel (12) heated to at least a Vicat softening temperature, preferably to a temperature at least 30 K or 50 K above the Vicat softening temperature.

12. Method according to Claim 11, wherein the mandrel (12) is pushed into a push-in region (14) of the hose (1), wherein the hose (1) is held on the outside in the push-in region (14) or partially or completely outside the push-in region (14).

13. Method according to Claim 11 or 12, wherein a crimping sleeve (16) is plugged on before the widening operation.

14. Series of hose arrangements, comprising at least two variants, each of which is a hose arrangement according to one of Claims 1 to 10 and/or is produced in a method according to one of Claims 11 to 13, in particular wherein the inner hoses of the variants have differing outer diameters D and/or outer diameters D of less than 10 mm, less than 9 mm or less than 7 mm.

**Revendications**

1. Flexible (1) avec un flexible interne (2) et une tresse (3), dans lequel le flexible interne (2) est fait d'un matériau thermoplastique non réticulé, dans lequel la tresse (3) présente une couverture de 75% à 99%, dans lequel le flexible interne (2) est fabriqué en PE-RT doté d'un indice de fusion (190 °C/2,16 kg) de 0,5 à 2 g/10 min et d'une densité de 0,925 à 0,960 g/cm$^3$, et dans lequel un diamètre externe (D) du flexible interne (2), indiqué et mesuré en mm, et une épaisseur de paroi s du flexible interne (2), indiquée et mesurée en mm, remplissent les conditions suivantes :

$$A \leq 10\ 000 * s / D^{1,5}$$

et

$$10\ 000 * s / D^{1,5} \leq B,$$

où A >= 390 1/mm$^{0,5}$, de préférence A = 425 1/mm$^{0,5}$, et B <= 585 1/mm$^{0,5}$, de préférence B = 565 1/mm$^{0,5}$.

2. Flexible (1) selon la revendication 1, dans lequel le flexible interne (2) est fabriqué avec une densité de 0,929 à 0,940 g/cm$^3$.

3. Flexible (1) selon une des revendications précédentes, dans lequel le diamètre externe D du flexible interne (2) est < 10 mm, de préférence < 9 mm ou 7 mm, et/ou la tresse touche le flexible interne autour de toute sa périphérie et/ou sur une longueur de la tresse.

4. Flexible (1) selon une des revendications précédentes, avec un flexible interne (2) et une tresse (3), laquelle tresse (3) présente un angle de tressage de 41°à 55°, en particulier de 43° à 49°, et une couverture de 84% à 93%.

5. Flexible (1) selon une des revendications précédentes, dans lequel la tresse (3) est formée avec un monofilament en matière plastique (4), en particulier en polyamide ou en polyester, d'un diamètre de 0,14 mm à 0,50 mm, en particulier de 0,20 mm à 0,3 mm et de façon particulièrement préférée de 0,25 mm $\pm$ 0,025 mm.

6. Flexible (1) selon une des revendications précédentes, dans lequel la tresse est formée avec un monofilament en acier inoxydable (4) d'un diamètre de 0,14 mm à 0,50 mm, en particulier de 0,16 mm à 0,2 mm et de façon particulièrement préférée de 0,18 mm $\pm$ 0,01 mm.

7. Dispositif de flexible (5) avec un raccord de flexible (6) et un flexible (1) comprenant un flexible interne (2) selon une des revendications 1 à 2, dans lequel le raccord de flexible (6) est disposé dans une zone d'insertion (7) du flexible (1), en particulier du flexible interne (2), dans lequel le diamètre externe ($da$) du raccord de flexible (6) dans la zone d'insertion (7) est au moins égal à une somme d'un diamètre interne d'ouverture ($di$) du flexible (1), en particulier du flexible interne (2), mesuré à l'extérieur de la zone d'insertion (7), et d'une épaisseur de paroi ($s$) d'une paroi (8) contigüe au diamètre interne d'ouverture ($di$), en particulier à 1,0, 1,1, 1,2, 1,3 ou 1,4 fois l'épaisseur de paroi ($s$) de la paroi (8).

8. Dispositif de flexible (5) selon la revendication 7, dans lequel le flexible (1) possède un flexible interne (2) et la paroi (8) est une paroi de flexible interne.

9. Dispositif de flexible (5) avec un raccord de flexible (6) et un flexible (1) selon une des revendications 1 à 3, dans lequel le raccord de flexible (6) est disposé dans une zone d'insertion (7) du flexible (1), en particulier du flexible interne (2), dans lequel un diamètre externe ($da$) du raccord de flexible (6) dans la zone d'insertion (7) est au moins égal à une somme d'un diamètre interne d'ouverture ($di$) du flexible (1), en particulier du flexible interne (2), mesuré à l'extérieur de la zone d'insertion (7), et d'une épaisseur de paroi ($s$) d'une paroi (8) contigüe au diamètre interne d'ouverture ($di$), en particulier à 1,0, 1,1, 1,2, 1,3 ou 1,4 fois l'épaisseur de paroi ($s$) de la paroi (8), et dans lequel le raccord de flexible (6) présente à son extrémité d'insertion (9) une face frontale (11) orientée dans la direction d'insertion (10), plane ou convexe en coupe axiale, laquelle face frontale (11) présente un diamètre externe ($d2$) qui est supérieur ou égal à un diamètre interne d'ouverture ($di$) du flexible (1) à l'extérieur de la zone d'insertion (7).

10. Dispositif de flexible (5) selon une des revendications 7 à 9, dans lequel le raccord de flexible (6) est disposé dans une zone d'insertion (7) du flexible (1), **caractérisé en ce que** le flexible (1) est élargi thermiquement à son extrémité d'insertion (9), en particulier avec un mandrin (12) chauffé au moins à une température de ramollissement Vicat, de préférence à une température qui est supérieure d'au moins 30 K ou 50 K à la température de ramollissement Vicat.

11. Procédé pour la fabrication d'un dispositif de flexible (5) selon une des revendications 7 à 10, selon lequel un raccord de flexible (6) est enfiché dans un flexible (1) comprenant un flexible interne (2) selon une des revendications 1 à 6, selon lequel un diamètre interne ($di$) du flexible (1) est élargi thermiquement avant et/ou lors de l'insertion du raccord de flexible (6), en particulier avec un mandrin (12) chauffé au moins à une température de ramollissement Vicat, de préférence à une température qui est supérieure d'au moins 30 K ou 50 K à la température de ramollissement Vicat.

12. Procédé selon la revendication 11, selon lequel le mandrin (12) est inséré dans la zone d'insertion (14) du flexible (1), lequel flexible (1) est maintenu du côté extérieur dans la zone d'insertion (14) ou partiellement ou totalement à l'extérieur de la zone d'insertion (14).

13. Procédé selon la revendication 11 ou 12, selon lequel une cosse de sertissage (16) est montée avant l'élargissement.

14. Gamme de dispositifs de flexible comprenant au moins deux variantes qui sont chacune un dispositif de flexible selon une des revendications 1 à 10 et/ou sont fabriquées chacune selon un des procédés 11 à 13, en particulier les flexibles internes des variantes ayant des diamètres externes D différents les uns des autres et/ou des diamètres externes D de moins de 10 mm, moins de 9 mm ou moins de 7 mm.

**Fig. 1**

**Fig. 2**

**Fig. 3**

**Fig. 4**

EP 4 146 970 B1

**Fig. 5**

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070209728 A1
- DE 202012100489 U1
- CN 205383359 U
- DE 202019103378 U1
- EP 2048422 A1
- DE 4320281 A1
- EP 1956149 A
- US 5124878 A
- DE 2557996 A1
- CN 105402502 B
- FR 3035171 A1